# EUROPÄISCHE PATENTSCHRIFT

(11) **EP 0 796 021 B1**
(45) Veröffentlichungstag und Bekanntmachung des Hinweises auf die Patenterteilung: **25.05.2005**
(21) Anmeldenummer: 97104066.2
(22) Anmeldetag: 11.03.1997
(51) Int. Cl.: H04Q 3/62

(54) **Verfahren und Anordnung zum Einbeziehen von abgesetzten Kommunikationssystemen in ein Corporate Network**
Method and devices for incorporating outside communication systems in a corporate network
Procédé et dispositifs pour incorporer des systèmes de communication extérieurs dans un réseau privé

(30) Priorität: 14.03.1996 DE 19610069
(43) Veröffentlichungstag der Anmeldung: 17.09.1997
(73) Patentinhaber: SIEMENS AKTIENGESELLSCHAFT, 80333 München (DE)
(72) Erfinder: Krüger, Uwe, Dipl.-Ing., 45131 Essen (DE); Kaschulla, Heinz, 45149 Essen (DE)

(56) Entgegenhaltungen:
- DE-A- 4 230 561
- US-A- 4 802 199
- US-A- 5 490 212
- KISS-SURANYI A: "DER GÜNSTIGSTE WEG ZUM ZIEL" 2323 TELCOM REPORT (SIEMENS), Bd. 18(1995)Januar/Februar, Nr. 1, Seiten 42-43, XP000491919 ISSN: 0344-4724

## Beschreibung

Firmeneigene bzw. private, kooperierende Kommunikationsnetze - in der Fachwelt als Corporate Networks bekannt - werden durch Verbinden von Fernsprech-und Datendienste realisierenden, privaten Kommunikationssytemen, insbesondere von Telekommunikations-Vertnittlungsanlagen, gebildet, wobei an die Kommunikationssysteme private Kommunikationsendgeräte - Fernsprech- und Datenendgeräte - angeschließbar sind. Das Verbinden der privaten Kommunikationssysteme - beispielsweise HICOM-Nebenstellenanlagen der Fa. Siemens - erfolgt vorzugsweise über ein privates Netz auf privatem Grund oder, sofern über ein privates Netz nicht möglich, über festgeschaltete Verbindungen eines öffentlichen Kommunikationsnetzes - beispielsweise des ISDN- bzw. Euro-ISDN-Kommunikationsnetzes. Die Anbindung von abgesetzten Kommunikationssystemen an ein Corporate Network erfolgt, sofern kein privates Kommunikationsnetz verfügbar ist, derzeit über festgeschaltete Verbindungen, da ein privates Wählinformationsschema bei Wählverbindungen über ein öffentliches Wähl-Kommunikationsnetz meist nicht verwendet werden kann. Dies bedeutet, daß abgesetzte Kommunikationssysteme mit wenigen angeschlossenen Kommunikationsendgeräten, d.h. geringen Verkehrswerten, nur mit hohem wirtschaftlichem Aufwand - Mieten zumindest einer festgeschalteten Verbindung eines öffentlichen Kommunikationsnetes - an ein Corporate Network angebunden werden können.

Stellt das abgesetzte Kommunikationssystem ein kundenindividuelles Kommunikationssystem dar, beispielsweise das abgesetzte Kommunikationssystem und das private Kommunikationsnetz sind unterschiedlichen Firmen zugeordnet, werden üblicherweise von den an das abgesetzte Kommunikationssystem angeschlossenen Kommunikationsendgeräten an das Corporate Network gerichtete Kommunikationsverbindungen über das öffentliche Kommunikationsnetz entsprechend deren Signalisierung und ggf. einer Nachwahl auf- bzw. abgebaut. Eine Nutzung insbesondere des im Corporate Network realisierten, ggf. kostengünstigeren privaten Übertragungsnetz ist nicht möglich.

Aus der US-Patentschrift 4,802,199 ist eine Anordnung und ein Verfahren zur Anbindung von abgesetzten Kommunikationssystemen an ein privates Kommunikationsnetz bekannt, wobei die abgesetzten Kommunikationssysteme über ein öffentliches Kommunikationsnetz mit dem privaten Kommunikationsnetz verbunden sind. Hierbei muss ein Teilnehmer am abgesetzten Kommunikationssystem für eine Verbindung in das private Kommunikationsnetz vor der Eingabe einer ein Zielendgerät kennzeichnenden Wählinformation eine Zusatzinformation eingeben.

Die der Erfindung zugrundeliegende Aufgabe besteht darin, eine Anbindung von privaten, abgesetzten Kommunikationssystemen an ein privates Kommunikationsnetz für einen Teilnehmer des abgesetzten Kommunikationssystems möglichst komfortabel zu gestalten. Die Aufgabe wird durch die Merkmale des Anspruchs 1 gelöst.

Der wesentliche Aspekt der Erfindung ist darin zu sehen, daß bei dem abgesetzten Kommunikationssystem - vorteilhaft mit Hilfe einer Netzzugriffseinrichtung gemäß Anspruch 9 bis 17 - eine vom bei einem Verbindungsaufbau von einem abgesetzten Kommunikationssystem bzw. Kommunikationsendgerät angegebene Wählinformation, d.h. die übermittelten Rufnummern, bewertet werden und in Abhängigkeit vom Bewertungsergebnis entweder direkt eine Verbindung ins öffentliche ISDN- Kommunikationsnetz oder über das ISDN-Kommunikationsnetz ― zum privaten Kommunikationsnetz aufgebaut wird. Für einen Aufbau einer Kommunikationsverbindung zum privaten Kommunikationsnetz wird aus der angegebenen Wählinformation eine zusätzliche, vorgegebene Wählinformation abgeleitet, d.h. die Kommunikationsverbindung wird an vorgegebene Kommunikationsanschlüsse des öffentlichen ISDN- Kommunikationsnetzes vermittelt. Die beim Verbindungsaufbau angegebene Wählinformationen werden erfindungsgemäß im Sub-Wählinformationsfeld - im Standard mit Subaddressing bezeichnet - der Euro-ISDN-Signalisierung DSS1 übermittelt. Gemäß dem Standard DSS1 umfaß das Sub-Wählinformationsfeld 20 Byte.

Ein wesentlicher Vorteil der Erfindung ist darin zu sehen, daß durch eine Bewertung der angegebenen Wählinformationen beim abgesetzten Kommunikationssystem die jeweilige Kommunikationsverbindung in Abhängigkeit von unterschiedlichsten Kriterien entweder direkt ins öffentliche ISDN- Kommunikationsnetz oder über dieses an ein privates bzw. Corporate-Network vermittelt wird. Ein wesentliches Kriterium stellt die "interne Rufnummer" dar. Wird in der Netzzugriffsseinrichtung eine interne Wählinformation bzw. Rufnummer erkannt, so wird ein Verbindungsaufbau zum privaten bzw. Corporate Network eingeleitet . Hierzu wird eine vorgegebene, in der Netzzugriffseinrichtung gespeicherte Wählinformation benutzt. Durch diese vorgegebene Wählinformation wird eine ankommende Verbindung an einen bestimmten Kommunikationsanschluß des ISDN-Kommunikationsnetzes vermittelt. Dieser Kommunikationsanschluß ist vorteilhaft über eine Netzzugangseinrichtung mit einem privaten bzw. Corporate-Network verbunden. Im Rahmen des Verbindungsaufbaus wird im "Subadressing"-Feld der Euro-ISDN- Signalisierung DSS1 die angegebene, d.h. interne Wählinformation bzw. Rufnummer des die Kommunikationsverbindung eines am abgesetzten Kommunikationssystem angeschlossenen, initialisierenden Kommunikationsendgerätes übermittelt.

Vorteilhaft wird die bei jedem Verbindungsaufbau im Rahmen der ISDN-Signalisierung grundsätzlich übermittelte Wählinformation des rufenden, an das abgesetzte Kommunikationssystem angeschlossenen Kommunikationsendgerätes hinsichtlich einer Kommunikationsnetz-Zugangs-Autorisierung ins zumindest eine, erste Kommunikationsnetz überprüft. Die Übermittelung der Wählinformation des rufenden, an das abgesetzte Kommunikationssystem angeschlossenen Kommunikationsendgerätes erfolgt im Rahmen der ISDN-Signalisierung als Ursprungs-Wählinformationen bzw. Rufnummern. Im Euro-ISDN-Standard ist diese Ursprungs-Wählinformation als Calling Line Identification and Presentation CLIP definiert, die jeweils ein eine Kommunikationsverbindung initialisierendes Kommunikationsendgerät und zusätzlich anzeigt, ob diese Wählinformation beim gerufenen Kommunikationsendgerät präsentiert bzw. angezeigt werden sollen.

Um sicherzustellen, daß Nichtberechtigte keinen Zugang zu einem Corporate Network erlangen, wird zusätzlich eine Identifizierungsinformation im Sub-Wählinformationsfeld der Signalisierung übermittelt. Beim Corporate Network wird die Identifikationsinformation hinsichtlich ihrer Autorisierung überprüft und in Abhängigkeit vom Überprüfungsergebnis die ankommende Kommunikationsverbindung entweder zum Corporate Network weitervermittelt oder abgewiesen. Hierbei werden die übermittelten Identifikationsinformationen mit denen in der Netzzugangseinrichtung gespeicherten verglichen und bei einer Übereinstimmung wird ein Verbindungsaufbau zum Corporate Network eingeleitet.

Ein weiteres wesentliches Kriterium für die Bewertung vom abgesetzten Kommunikationssystem angegebenen Wählinformation stellt die Gebührenbewertung dar. Hierzu sind beim abgesetzten Kommunikationssystem weitere Wählinformationen, bzw. ISDN- Wählinformationen bzw. Rufnummern gespeichert, bei deren Auftreten in der angegebenen Wählinformation die zugeordnete Kommunikationsverbindung aus Kosten- bzw. Gebührengründen nicht über das ISDN-Kommunikationsnetz sondern über das Corporate Network vermittelt wird. Bei den weiteren Wählinformationen handelt es sich im wesentlichen um ISDN-Wählinformationen, die jeweils vorgegebenen geographischen Bereichen, wie Staaten, Ländern, Städten usw. zugeordnet sind.

Bei Auftreten dieser geographiebereichs-spezifischen Wählinformationen wird die jeweilige ankommende Kommunikationsverbindung über das ISDN-Kommunikationsnetz zum nächstliegenden Coporate Network vermittelt und in diesem über beispielsweise kostengünstige private Netzwerke an den jeweiligen geographischen Zielbereich weitervermittelt. Im Zielbereich kann die jeweilige Kommunikationsverbindung wieder in das ISDN- Kommunikationsnetz vermittelt und in diesem zu einem ISDN- Kommunikationsendgerät weitervermittelt werden. Im Corporate Network muß die ISDN-Wählihformation mitgeführt und entsprechend der ISDN-Signalisierung im geographischen Zielbereich eingefügt werden. Diese in der Fachwelt als "least cost routing" bezeichnete Maßnahme ist für diejenigen Kommunkationsverbindungen besonders vorteilhaft, die über private Netze bzw. Corporate Network gebührengünstiger als über das öffentliche ISDN-Kommunikationsnetz vermittelt werden können. Das "least cost routing" wird insbesondere vorteilhaft bei internationalen Kommunikationsverbindungen angewandt.

Bei einer Vermittlung einer internen Kommunikationsverbindung wird die im Sub-Wählinformationsfeld übermittelte, angegebene Wählinformation im Corporate Network - vorteilhaft in der Netzzugangseinrichtung - bewertet, und nach dem Feststellen bzw. Erkennen der übermittelten angegebenen Wählinformation als Wählinformation wird mit dieser die jeweilige Kommunikationsverbindung zu dem betreffenden Kommunikationsendgerät des ersten Kommunikationsnetzes bzw. des Corporate Networks vermittelt.

Weitere vorteilhafte Ausgestaltungen der Erfindung, insbesondere eine Netzzugriffs einrichtung ist den weiteren Patentansprüchen zu entnehmen.

Im folgenden wird die Erfindung anhand von vier Zeichnungen näher erläutert.

Dabei zeigen:
- FIG 1: in einem Blockschaltbild die erfindungsgemäße Kommunikationsanordnung,
- FIG 2: ein der FIG 1 zugeordnetes Ablaufdiagramm,
- FIG 3: in einem Blockschaltbild die Struktur einer Netzzugriffseinrichtung und
- FIG 4: die Struktur einer Netzzugangseinrichtung

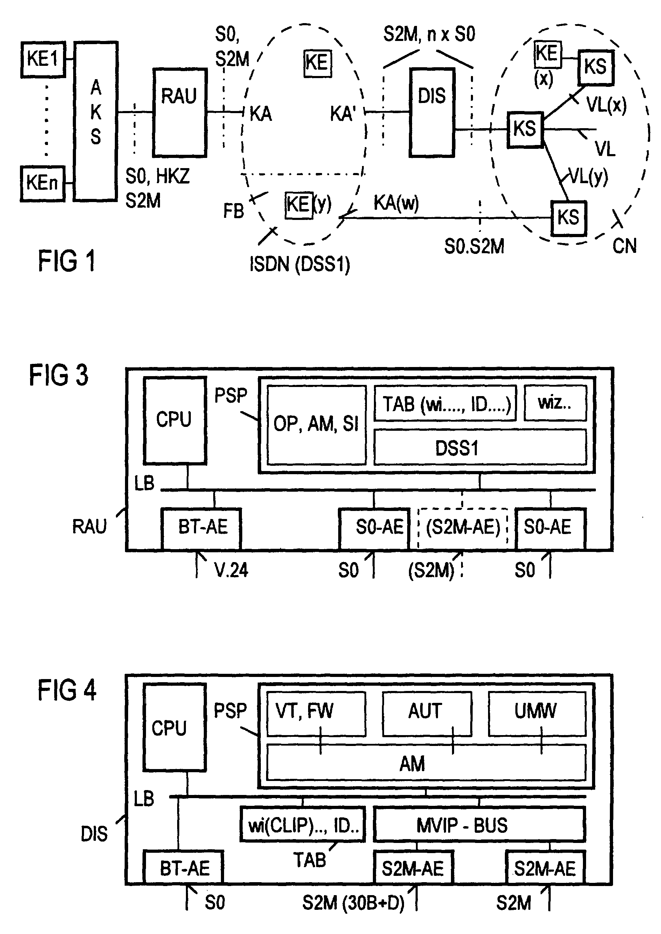

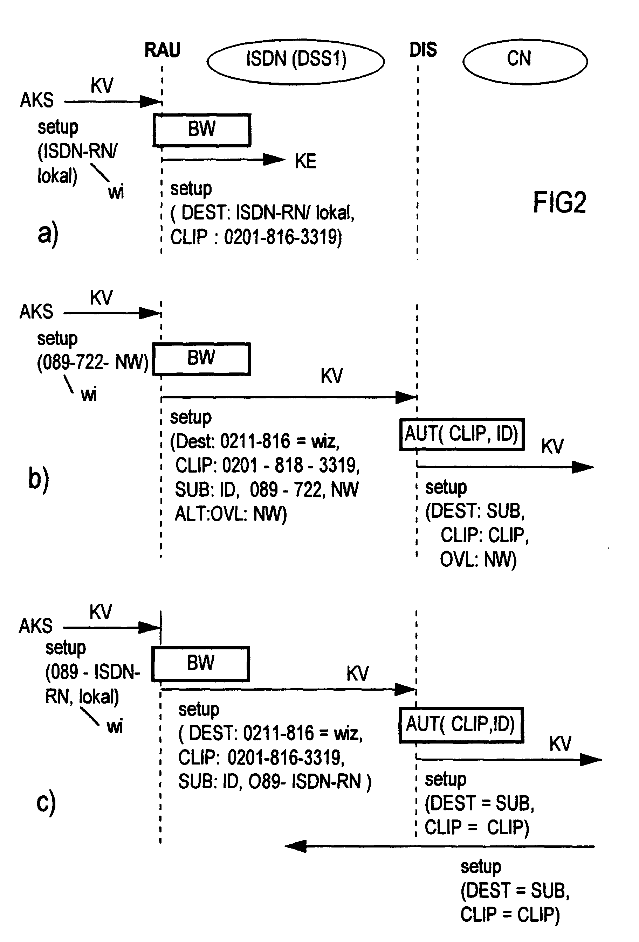

FIG 1 zeigt ein ISDN-Kommunikationsnetz ISDN und ein privates Netzwerk bzw. ein Corporate Network CN - jeweils durch gestrichelte Linien angedeutet. Die physikalischen und prozeduralen Eigenschaften von Kommunikationsanschlüssen KA des ISDN- Kommunikationsnetzes ISDN sind gemäß dem ETS-Standard ETS 300 195 "Integrated Services Digital Network (ISDN); Digital Subscriber Signalling System No. 1 (DSS1)" ausgebildet. Dieser in der Fachwelt als Euro-ISDN-Kommunikationsanschluß (DSS1) bekannte ISDN-Kommunikationsanschluß KA weist ein Leistungsmerkmal "Subaddressing" auf, mit dessen Hilfe beim Verbindungsaufbau einer Kommunikationsverbindung KV - siehe FIG 2 - eine Informationsübermittlung im Signalisierungskanal bzw. im D-Kanal möglich ist. In diesem Sub- Wählinformationsfeld bzw. "Subaddressing"-Feld können Informationen mit einer maximalen Länge von 20 Byte, d.h. auch eine 15-stellige ISDN-Wählinformation übermittelt werden.

Das Corporate Network CN stellt beispielsweise ein firmeneigenes, privates Kommunikationsnetz dar, daß durch untereinander vermaschte Kommunikationssysteme KS - beispielhaft sind drei Kommunikationssysteme KS dargestellt - gebildet ist. Hinsichtlich der physikalischen und prozeduralen Eigenschaften ist das Corporate Network CN beispielsweise gemäß dem ISDN-orientierten Cornet-Protokoll der Firma Siemens realisiert. Das Cornet-Protokoll umfaßt neben den standardisierten ISDN-Eigenschaften bzw. Leistungsmerkmalen zusätzliche Leistungsmerkmale, die über den Leistungsmerkmalsumfang der öffentlichen ISDN-Kommunikationsnetze ISDN hinausgehen.

An einen ISDN-Basisanschluß S0 des ISDN-Kommunikationsnetzes ISDN ist eine Netzzugriffseinrichtung RAU (Remote-Access-Unit) angeschlossen. Ein derartiger ISDN-Basisanschluß S0 umfaßt zwei Nachrichtenkanäle B mit jeweils einer Übertragungsgeschwindigkeit von 64 kbit/s und einen Signalisierungskanal D mit einer Übertragungsgeschwindigkeit von 16 kbit/s. Die Netzzugriffseinrichtung RAU weist einen weiteren, gleichartig realisierten ISDN-Basisanschluß S0 auf, der mit einem ISDN-Basisanschluß S0 eines abgesetzten Kommunikationssystems AKS verbunden ist. In Abhängigkeit von dem Verkehrsaufkommen zwischen dem abgesetzten Kommunikationssystem AKS und dem ISDN-Kommunikationsnetz ISDN ist die Anzahl der ISDN- Basisanschlüsse S0 abzustimmen - beispielsweise drei oder vier - oder alternativ kann die Netzzugriffseinrichtung RAU mit dem abgesetzten Kommunikationssystem AKS über eine ISDN- Primärschnittstelle S2M verbunden werden. Die ISDN- Primärschittstelle umfaßt 30 Nachrichtenkanäle (N) und einen Signalisierungskanal D. Für den Anschluß von herkömmlichen, abgesetzten Kommunikationssystemen AKS sind alternativ analoge HKZ-Schnittstellen HKZ realisierbar, wobei, um ISDN- Kommunikationsverbindungen KV zu realisieren, zumindest zwei gemäß dem bekannten Hauptanschlußkennzeichen (HKZ)- Signalisierungsverfahren wirkende HKZ- Schnittstellen HKZ vorgesehen sind.

Das abgesetzte Kommunikationssystem AKS stellt beispielsweise eine weitere firmeneigene Nebenstellenanlage dar, wobei die Betreiber des Corporate Network CN und des abgesetzten Kommunikationssystems AKS gleich oder unterschiedlich sein können. Für das Ausführungsbeispiel sei angenommen, daß das abgesetzte Kommunikationssystem AKS bzw. deren angeschlossene Kommunikationsendgeräte K1 ...n Verbindungsleitungen VL des Corporate Network CN nutzen können. Eine derartige Nutzung ist besonders vorteilhaft, wenn sich dadurch Gebühreneinsparungen gegenüber einer Vermittlung im bzw. über das ISDN- Kommunikationsnetz ergeben. Eine derartige Nutzung ist folglich nur für Fernverbindungen, d.h. nicht bei Verbindungen im Ortsbereich, sinnvoll. Dies bedeutet, daß eine Kommunikationsverbindung KV im Ortsbereich stets über das ISDN- Kommunikationsnetz ISDN - durch eine strichpunktierte Linie angedeutet - und eine Fernverbindung in Abhängigkeit von einer Gebührenbewertung entweder im ISDN-Kommunikationsnetz ISDN oder über ISDN-Kommunikationsnetz ISDN an das Corporate Network CN vermittelt wird.

Hierzu ist das ISDN-Kommunikationsnetz ISDN über eine Netzzugangseinrichtung DIS (Dial in Server) mit dem Corporate Network CN verbunden. Die Kommunikationsanschlüsse KA sowohl des ISDN- Kommunikationsnetzes ISDN als auch des Corporate Network CN sind jeweils durch einen ISDN-Primäranschluß S2M realisiert. Der ISDN-Primäranschluß S2M umfaßt 30 Nachrichtenkanäle a 64 kbit/s und einen Signalisierungskanal D mit 64 kbit/s. Dieser mehrere Nachrichtenkanäle B aufweisende ISDN-Primäranschluß SM2 wird vorteilhaft bei Einbeziehen mehrerer abgesetzter Kommunikationssysteme AKS in das Corporate Network CN verwendet. Alternativ sind bei geringeren Verkehrsaufkommen n ISDN-Basisanschlüsse S0 - beispielsweise fünf - realisierbar.

FIG 2 a) - c) zeigt in einem Ablaufdiagramm in Abhängigkeit von der durch eines der Kommunikationsendgeräte KE1..n angegebenen Wählinformationen wi drei unterschiedliche Verbindungsaufbauvarianten. Bei der in Figur 2 a) dargestellten Variante wird von einem der an das abgesetzte Kommunikationssystem AKS angeschlossenen Kommunikationsendgeräte KE1..n über das abgesetzte Kommunikationssystem AKS ein Verbindungsaufbau setup zu der in FIG 1 dargestellten Netzzugriffseinrichtung RAU eingeleitet. Als Ziel-Wählinformation wi bzw. Rufnummer ist eine ISDN-Wählinformation ISDN-RN angegeben, dessen zugeordnetes ISDN-Kommunikationsendgerät KE sich im gleichen geographischen bzw. lokalen Bereich des ISDN- Kommunikationssystems - beispielsweise im gleichen Stadtbereich - wie das abgesetzte Kommunikationssystem AKS befindet. Die angegebene Wählinformation wi bzw. ISDN-Rufnummer ISDN-RN wird in der Netzzugriffseinrichtung RAU durch eine Bewertungsfunktion BW bewertet, d.h. durch Vergleich der angegebenen Wahlinformation wi mit in der Zugriffseinrichtung RAU gespeicherten Wählinformationen wi wird bei keiner Übereinstimmung bestimmt, daß der Verbindungsaufbau der ankommenden Kommunikationsverbindung KV unverändert an das ISDN-Kommunikationsnetz ISDN weiterzuleiten ist. Hierzu wird ein Verbindungsaufbau setup zum ISDN-Kommunikationsnetz ISDN eingeleitet, wobei als Ziel-Wählinformation DEST die angegebene ISDN-Rufnummer ISDN-RN und als das Ursprungs-Kommunikationsendgerät K1..n definierende Wählinformation gemäß dem Standard ETS 300 195 eine Calling Line Identification and Presentation (CLIP) - im weiteren wird die Abkürzung CLIP benutzt - eingefügt ist. Im Ausführungsbeispiel ist die im abgesetzten Kommunikationssystem AKS für jedes angeschlossene Kommunikationsendgerät KE1,,n gespeicherte CLIP beispielsweise durch eine ISDN-Wählinformation 0201-816-3319 repräsentiert. Der eingeleitete Verbindungsaufbau der Kommunikationsverbindung KV wird im ISDN-Kommunikationsnetz ISDN weitergeführt und nach einer Übermittlung einer Durchschaltemeldung - nicht dargestellt - wird die Kommunikationsverbindung KV sowohl in der Netzzugriffseinrichtung RAU als auch im abgesetzten Kommunikationssystem AKS durchgeschaltet. Die Verbindungsauslösung erfolgt gemäß dem vorhergehend angegebenen ETS-Standard.

FIG 2 b) zeigt eine Verbindungsaufbaualternative, bei der der Verbindungsaufbau setup mit einer Ziel-Wählinformation wi eingeleitet wird, die sich aus einer Fern-Wählinformation 089, einer regionalen Wählinformation 722 und einer Nachwahlinformation NW zusammensetzt. Durch die Bewertungsfunktion BW in der Netzzugriffseinrichtung RAU wird durch Vergleich der ankommenden Fernwähl- und regionalen Wählinformation 089-722 mit in einer gespeicherten Wählinformationstabelle TAB - siehe FIG 3 - gespeicherten Wählinformationen wi erkannt, daß das dieser Wählinformation wi zugeordnete Kommunikationsendgerät KE im Corporate Network CN angeordnet ist - d.h. es handelt sich um eine intere Wählinformation wi - und eine Kommunikationsverbindung KV im lokalen Bereich über das ISDN-Kommunikationsnetz ISDN und im Fernbereich über das Corporate Network vermittelt wird - im Ausführungsbeispiel vom regionalen Bereich Düsseldorf zum Zielbereich München . Eine Vermittlung über das Corporate Network CN ist darüberhinaus aufgrund von noch nicht ausgelasteten, festgeschalteten Verbindungsleitungen VL - im Ausführungsbeispiel beispielsweise festgeschaltete Verbindungsleitungen VL von Düsseldorf nach München - kostengünstiger als eine Fern-Vermittlung über das ISDN-Kommunikationsnetz ISDN - in der Fachwelt als "Least Cost Routing" bekannt. Um eine Vermittlung der jeweiligen Kommunikationsverbindung KV ins Corporate Network zu bewirken, wird in der Netzzugriffseinrichtung RAU ein Verbindungaufbau setup zu einem vorgegebenen ISDN- Kommunikationsanschluß KA (S0) eingeleitet. Hierzu ist als Ziel- Wählinformation DEST beispielsweise eine Wählinformation 0211-816 vorgegeben. Diese Wählinformation entspricht einer zusätzlichen Wählinformation wiz, die in der Netzzugriffseinrichtung RAU gespeichert ist. Als Ursprungs-Rufnummer ist wieder die CLIP - siehe FIG 2 a) - vorgesehen. In das Sub- Wählinformationsfeld SUB - im Euro-ISDN-Standard das Subaddressing-Feld - wird die angegebene Wahlinformation wi eingefügt. Hierbei wird die angegebene Wahlinformation wi überlicherweise vollständig im Subaddressing-Feld SUB oder die Nachwahl NW bzw. werden die Nachwahlziffern gemäß dem im ISDN-Standard angegebenen Overlap-Sending-Verfahren OVL übermittelt - in FIG 2 b) durch in die Bezeichnung ALT: OVL: NW angedeutet. Hierbei werden die Nachwahlinformationen NW, insbesondere bei zeitlichen Verzögerungen bei der Eingabe der Nachwahlinformationen NW transparent in hierfür vorgesehenen Informationsfeldern des "Subaddressing-Feldes" gemäß dem Overlap-Sending- Verfahren übermittelt.

Der weitere Verbindungsaufbau setup wird über das ISDN-Kommunikationsnetz ISDN zur Netzzugangseinrichtung DIS geführt, wobei die angegebenen Informationen übermittelt werden. In der Netzzugangseinrichtung DIS wird eine Autorisierungsüberprüfung AUT mit Hilfe der CLIP durchgeführt. Hierzu wird die übermittelte CLIP mit in Tabellen TAB gespeicherten CLIP verglichen und bei einer Übereinstimmung wird der Verbindungsaufbau weitergeführt. Dies bedeutet, daß nur autorisierte Kommunikationsverbindungen KV in das Corporate Network CN weitergeleitet werden. Um eine zusätzliche Zugangssicherheit zu erreichen, kann im "Subaddressing"-Feld zusätzlich eine Identifikationsinformation ID übermittelt werden, die in der Netzzugangseinrichtung DIS mit gespeicherten Identifikationsinformationen ID verglichen wird und bei einer Übereinstimmung wird der Verbindungsaufbau ins Corporate Network CN weitergeleitet. Der Verbindungsaufbau setup wird mit der im "Subaddressing" - Feld übermittelten Rufnummern 089-722-NW als Ziel-Wählinformation DEST mit der übermittelten CLIP oder alternativ die Nachwahlinformationen NW mit Hilfe der Overlap-Sending Funktion OVL durchgeführt . In Corporate Network CN wird die Kommunikationsverbindung KV über die festgeschaltete Verbindung VL(x) an das betreffende private Kommunikationssystem KS w und von diesem an das durch die Nachwahlinformationen NW definierten Kommunikationsendgerät KE (x) vermittelt.

Bei der Variante nach FIG 2 c) wird vom abgesetzten Kommunikationssystem AKS eine Wählinformation wi übergeben, bei der das adressierte Kommunikationsendgerät KE im Fernbereich des ISDN-Kommunikationsnetzes ISDN angeordnet ist. In der FIG 1 ist das in diesem Fernbereich FB angeordnete Kommunikationsendgerät mit KE (y) bezeichnet.

Durch die Bewertungsfunktion BW, d.h. durch Vergleich von gespeicherten mit angegebenen Ziel-Wählinformationen wi wird in der Netzzugriffseinrichtung RAU festgestellt, daß die Kommunikationsverbindung KV über das Corporate Network CN kostengünstiger vermittelt wird als über das ISDN- Kommunikationsnetz KN. Wie bereits erläutert, können nicht ausgelastete Verbindungsleitungen VL oder günstigere Gebühren im Corporate Network CN die Kostenreduzierung bewirken. Folglich wird ein Verbindungsaufbau setup mit der gleichen Ziel-Wählinformation DEST und der gleichen CLIP wie in FIG 2 a) eingeleitet. Im Subaddressing-Feld SUB wird die angegebene Ziel- Wählinformation wi entweder vollständig oder mit Hilfe des erläuterten Overlap-Sending-Verfahren OVL übermittelt - im Ausführungsbeispiel 089 und eine lokale ISDN-Rufnummer ISDN - RN. Die in der Netzzugangseinrichtung DIS ankommende Verbindung KV wird hinsichtlich ihrer Autorisierung AUT mit Hilfe der CLIP überprüft und anschließend ein Verbindungsaufbau setup an das Corporate Network CN eingeleitet. Als Ziel-Wählinformation DEST wird die im Subaddressing-Feld SUB übermittelte Wählinformation wi und als Ursprungs-Wahlinformation bzw. Rufnummer die CLIP eingefügt. Mit Hilfe dieser beiden Informationen wi, CLIP wird die Kommunikationsverbindung KV an das Kommunikationssystem KS übermittelt und von diesem beispielsweise über einen weiteren ISDN-Basisanschluß S0 bzw. einen ISDN- Primäranschluß S2M an einen Kommunikationsanschluß KA(w) im Fernbereich FB des ISDN- Kommunikationsnetzes ISDN weiter vermittelt. In diesem wird die Kommunikationsverbindung KV an das adressierte Kommunikationsendgerät KE(y) weitergeführt, wobei der Verbindungsdaufbau setup mit der Zielinformation DEST und der Ursprungs-Wahlinformation bzw. Rufnummer CLIP eingeleitet wird.

Die Gebührenberechnung in den Varianten gemäß FIG 2 b) und c) wird mit Hilfe der übermittelten CLIP durchgeführt. Die Berechnung der Vermittlungsgebühren für eine Vermittlung von Kommunikationsverbindungen KV im Corporate Network CN wird unabhängig von der Ermittlung der Gebühren im ISDN- Kommunikationsnetz ISDN in den jeweiligen lokalen Bereichen ermittelt. Beim Ausführungsbeispiel ergeben sich jeweils Ortsbereichsgebühren für die beiden lokalen Bereiche und Gebühren für die Vermittlung über das Corporate Network.

FIG 3 zeigt in einem Blockschaltbild die Netzzugriffseinrichtung RAU, in der an einen gemeinsamen, lokalen Bus LB eine Steuerung CPU, zwei ISDN-Basisanschlußeinheiten S0-AE, eine Betriebstechnik-Anschlußeinheit BT-AE sowie ein Programmspeicher PSP angeschlossen ist. Alternativ ist anstelle der zwei ISDN-Basisanschlußeinheiten S0-AE eine ISDN- Primäranschluß-einheit S2M-AE einsetzbar - durch die Bezeichnung (S2M-AE) und strichlierte Linien angedeutet. Der Steuerung CPU ist ein Arbeitsspeicher - nicht dargestellt - zugeordnet. Die Steuerung CPU ist beispielsweise durch ein Microprozessorsystem realisiert, wobei der lokale Bus LB durch den Microprozessor-Bus gebildet ist.

In den ISDN-Basisanschlußeinheiten S0-AE bzw. der ISDN- Primäranschluß-einheit S2M-AE ist jeweils Schicht 1 - physikalische Schicht - und Schicht 2 - Sicherungsschicht - einer ISDN-Basisschnittstelle S0 oder einer ISDN- Primärschnittstelle (S2M) realisiert. Desweiteren ist im Programmspeicher PSP eine Programmstruktur für den Betrieb OP, die Verwaltung AM und die sicherungstechnische Überwachung SI der Netzzugriffseinrichtung RAU vorgesehen. Die Schicht 3 - Meldungen bzw. Informationen werden von den ISDN-Basisschnittstellen S0 bzw. von der ISDN- Primäranschluß-einheit (S2M-AE) an die Steuerung CPU geleitet und dort mit Hilfe einer im Programmspeicher PSP gespeicherten Programmstruktur DSS1 bearbeitet. In einer Tabelle TAB des Programmspeichers PSP sind insbesondere die angegebenen Wählinformationen bzw. Ziel- Wählinformationen wi sowie Identifikationsinformationen ID gespeichert. Bei den angegebenen Wählinformationen wi handelt es sich insbesondere um die Wählinformation bzw. Teile von Wählinformationen wi von gerufenen Kommunikationsendgeräten KE, die im Corporate Network CN oder im Fernbereich FB des ISDN-Kommunikationsnetzes ISDN angeordnet sind und die über das Corporate Network CN vermittelt werden. Mit Hilfe der in der Tabelle TAB gespeicherten Wählinformationen wi - insbesondere die den Fernbereichsteil bestimmenden Wählinformation wi, im Ausführungsbeispiel 089 - werden die Bewertungen von im Rahmen eines Verbindungsaufbaus übermittelten, angegebenen Wählinformationen bzw. Ziel-Wählinformationen wi vorgenommen, d.h. stimmt die übermittelte angegebene Wählinformation wi mit einer gespeicherten Wählinformation wi überein - beispielsweise 089-722-, so wird die ankommende Kommunikationsverbindung KV über das ISDN-Kommunikationsnetz ISDN an das Corporate Network CN vermittelt. Die Betriebstechnik-Anschlußeinheit BT-AE realisiert eine V.24-Schnittstelle V.24, an die im Sinne eines Betreibens und Wartens der Netzzugriffseinrichtung RAU vor Ort ein Betriebstechnikterminal - nicht dargestellt - anschließbar ist. Eine Fernwartung bzw. ein Fernbetrieb der Netzzugriffseinrichtung RAU ist vom abgesetzten Kommunikationssystem AKS über den zumindest einen ISDN-Basisanschluß S0 möglich. Im Rahmen dieses Fernbetriebs ist auch eine Übermittlung, Änderung und Speicherung von in der Tabelle TAB eingetragenen Wählinformationen wi möglich, wodurch die Tabelle TAB an die aktuellen Anforderungen in komfortabelster Weise angepaßt werden kann. Zusätzlich sind im Speicher PSP weitere, fernadministierbare Wählinformationen wiz gespeichert, die für einen gezielten Verbindungsaufbau zu dem Kommunikationsanschluß KA vorgesehen sind, an den die zugeordnete Netzzugangseinrichtung DIS angeschlossen sind.

FIG 4 zeigt in einem Blockschaltbild eine Ausgestaltung einer Netzzugangseinrichtung DIS, in der ein lokaler Bus LB mit einer Steuerung CPU, einem Programmspeicher PSP, einer Betriebstechnik-Anschlußeinheit BT-AE und mit einem Multi-Vendor-Integration-Protocol - Bus MVIP-Bus verbunden ist, an den jeweils eine einen ISDN-Primäranschluß S2M realisierende ISDN-Primär-Anschlußeinheit S2M-AE angeschlossen ist. Der Multi-Vendor-Integration-Protocol-Bus MVIP-Bus realisiert ein Multi-Vendor-Integration-Protocol - im weiteren mit MVIP bezeichnet - und einen physikalischen Bus, mit dessen Hilfe auf acht seriellen Kanälen mit a 2048 kBit/s 256 64 kBit/s-Kanäle übertragen bzw. gesteuert werden können. Dieser MVIP - Bus eignet sich insbesondere für die Verbindung von ISDN-Anschlußeinheiten AE - z.B. ISDN-Basis- oder ISDN-Primär- Anschlußeinheiten S0-AE, S2M-AE - und für deren Verbindung untereinander.

Ein ISDN-Primäranschluß S2M umfaßt dreißig Nachrichtenkanäle B mit jeweils 64 kBit/s und einen Signalisierungskanal B mit 16 kBit/s. Über einen derartigen ISDN-Primäranschluß S2M können somit dreißig Kommunikationsverbindungen KV einschließlich der zugesordneten ISDN-Signalisierungen übermittelt werden. Dies bedeutet, daß das Corporate Network CN mit dem ISDN-Kommunikationsnetz ISDN über dreißig Nachrichtenkanäle B angeschlossen ist, über die bis zu dreißig Kommunikationsverbindungen KV ankommen können. Bei einer erheblich geringeren Anzahl von zu erwartenden, zu vermittelnden Kommunikationsverbindungen KV kann anstelle der ISDN-Primär-Anschlußeinheit SM2-AE eine oder mehrere ISDN-Basisa-Anschlußeinheiten S0-AE integriert werden. Diese ISDN-Basis-Anschlußeinheiten S0-AE werden direkt an den lokalen Bus LB angeschlossen, wobei der MVIP - Bus entfällt. Die eine weitere S0-Schnittstelle S0 realisierende Betriebstechnik-Anschlußeinheit BT-AE wird in gleicher Weise benutzt wie bei der Netzzugriffseinrichtung RAU.

Die vorteilhaft durch ein Mikroprozessorsystem realisierte Steuereinrichtung CPU steuert über den als Mikroprozessorbus realisierten lokalen Bus LB die Netzzugangseinrichtung DIS mit Hilfe der im Programmspeicher PSP implementierten Programmstrukturen. Eine Verwaltungstechnik- Programmstruktur AM verwaltet eine vermittlungstechnische Programmstruktur VT, FW, eine Autorisierungs-Programmstruktur AUT und eine Umwertungs-Programmstriktur UMW. Die Vermittlungstechnik- Programmstruktur VT,FW ist für das Routing der ankommenden Kommunikationsverbindungen KV bzw. für die Schicht - 3 - Protokolsteuerung der abgehenden und kommenden Kommunikationsverbindungen KV vorgesehen. Des weiteren übernimmt die Vermittlungstechnik-Programmstruktur VT, FW die prozedurale Steuerung einer Fernwartungsfunktion FW, die insbesondere von einem im Corporate Network CN integrierten Kommunikationssystem KS durchgeführt wird. Über diese Fernwartungsfunktion FW sind die in einer Tabelle TAB gespeicherten Wahlinformationen wi .. sowie Identifikationsinformationen ID.. und die weitere Wählinformation wiz aktualisierbar, das heißt sie werden gelöscht, geändert oder neu hinzugefügt.

Mit Hilfe der Autorisierungs-Programmstruktur AUT werden die übermittelten Wählinformationen der rufenden Kommunikationsendgeräte KE1..n, das heißt die CLIP mit den in der Tabelle TAB gespeicherten CLIP verglichen und bei Übereinstimmung wird für die ankommende Informationsverbindung KV ein Verbindungsaufbau zum Corporate Network CN eingeleitet.

Mit Hilfe der Umwertungs-Programmstruktur UMW werden die über das Corporate Network CN zu einem weiteren ISDN- Kommunikationsanschluß KA(w) zu übermittelnden Kommunikationsverbindungen KV umgewertet, das heißt es wird anstelle der übermittelten Zielinformation DEST eine Zielinformation DEST gebildet und in die ISDN-Signalisierung eingefügt, mit deren Hilfe die Kommunikationsverbindung KV zu einem weiteren Kommunikationsanschluß KA(w) des ISDN-Kommunikationsnetzes ISDN vermittelt wird. Diese Ausgestaltung der Erfindung ist insbesondere für Kommunikationsverbindungen KV vorgesehen, die von einem lokalen Bereich über das Corporate Network CN in einen Fernbereich - beispielsweise von München nach Düsseldorf oder auch in einen Fernbereich in den USA - aus Gründen der Gebühreneinsparung vermittelt werden. Gerade bei Fernverbindungen kann eine Vermittlung von Kommunikationsverbindungen KV über Corporate Networks CN kostengünstiger und somit wirtschaftlicher sein.

## Patentansprüche

1. Verfahren zur Steuerung von Kommunikationsverbindungen (KV) zwischen zumindest einem privaten Kommunikationsnetz (CN) und abgesetzten, mit Kommunikationsendgeräten (KE1..n) verbundenen Kommunikationssystemen (AKS) über ein ISDN-Kommunikationsnetz (ISDN),
- bei dem bei einem Verbindungsaufbau von einem abgesetzten Kommunikationssystem (AKS) eine angegebene, ein Zielendgerät identifizierende Wählinformation (wi) bewertet und in Abhängigkeit vom Bewertungsergebnis
-- entweder mit der angegebenen Wählinformation (wi) eine Kommunikationsverbindung (KV) ins ISDN-Kommunikationsnetz (ISDN) aufgebaut wird,
-- oder aus der angegebenen Wählinformation (wi) eine zusätzliche, vorgegebene Wählinformation (wiz) abgeleitet wird, mit deren Hilfe über das ISDN-Kommunikationsnetz (ISDN) eine Verbindung mit dem zumindest einen privaten Kommunikationsnetz (CN) aufgebaut wird, wobei die angegebene Wählinformation (wi) im Subadressing (SUB) gemäß der standardisierten Euro-ISDN-Signalisierung (DSS1) beim Verbindungsaufbau zum zumindest einen privaten Kommunikationsnetz (CN) übermittelt wird.

2. Verfahren nach Anspruch 1,
**dadurch gekennzeichnet,**
- **daß** im zumindest einen privaten Kommunikationsnetz (CN) mit Hilfe der jeweils übermittelten Wählinformation (CLIP) des rufenden, an das abgesetzte Kommunikationssystem angeschlossenen Kommunikationsendgerätes (KE1..n) die Kommunikationsnetzzugangs-Autorisierung der jeweiligen ankommenden Kommunikationsverbindung (KV) überprüft wird,
- **daß** bei festgestellter Autorisierung die ankommende Kommunikationsverbindung (KV) aufgebaut und im Sinne einer Weitervermittlung die übermittelte, angegebene Wählinformation (wi) an das zumindest eine private Kommunikationsnetz (CN) übermittelt wird, und
- **daß** bei nicht festgestellter Autorisierung die ankommende Kommunikationsverbindung (KV) abgewiesen wird.

3. Verfahren nach einem der vorhergehenden Ansprüche,
**dadurch gekennzeichnet,**
**daß** zusätzlich zur angegebenen Wählinformation (wi) eine Identifizierungsinformation (ID) im Subadressing (SUB) der standardisierten Euro-ISDN-Signalisierung (DSS1) übermittelt wird, und
- **daß** in dem zumindest einen privaten Kommunikationsnetz (CN) mit Hilfe der übermittelten Identifikationsinformation (ID) zusätzlich die Autorisierung der jeweiligen ankommenden Kommunikationsverbindung (KV) überprüft wird,
- **daß** bei festgestellter Autorisierung die ankommende Kommunikationsverbindung (KV) aufgebaut und im Sinne einer Weitervermittlung die übermittelte, angegebene Wählinformation (wi) an das zumindest eine private Kommunikationsnetz (CN) übermittelt wird, und
- **daß** bei nicht festgestellter Autorisierung die ankommende Kommunikationsverbindung (KV) abgewiesen wird.

4. Verfahren nach einem der vorhergehenden Ansprüche,
**dadurch gekennzeichnet,**
**daß** bei den abgesetzten Kommunikationssystemen (AKS)
- dem zumindest einen privaten Kommunikationsnetz (CN) zugeordnete interne Wählinformationen (wi) anzeigende Informationen gespeichert sind,
- **daß** bei einem Verbindungsaufbau die angegebene Wählinformationen (wi) mit den Informationen (wi) verglichen wird, und
- **daß** bei einem eine interne Wählinformation (wi) anzeigenden Vergleichsergebnis eine Kommunikationsverbindung (KV) über das ISDN-Kommunikationsnetz (ISDN) zum zumindest einen privaten Kommunikationsnetz (CN) aufgebaut wird.

5. Verfahren nach einem der vorhergehenden Ansprüche,
**dadurch gekennzeichnet,**
**daß** bei den abgesetzten Kommunikationssystemen (AKS)
- weitere Wählinformationen (wi) von Kommunikationsendgeräten gespeichert sind, zu denen eine Kommunikationsverbindung (KV) im Sinne einer Gebührenersparnis über das zumindest eine private Kommunikationsnetz (CN) vermittelt wird,
- **daß** bei einem Verbindungsaufbau die angegebene Wählinformation (wi) mit den weiteren Wählinformationen (wi) verglichen wird und bei einer Übereinstimmung die Kommunikationsverbindung (KV) über das ISDN-Kommunikationsnetz (ISDN) zum zumindest einen privaten Kommunikationsnetz (CN) aufgebaut wird.

6. Verfahren nach einem der vorhergehenden Ansprüche,
**dadurch gekennzeichnet,**
**daß** die Kommunikationsverbindungen (KV) von abgesetzten Kommunikationssystemen (AKS) zu durch die vorgegebenen Wählinformationen (wiz) bestimmen Kommunikationsanschlüssen (KA') des zumindest einen privaten Kommunikationsnetzes (CN) aufgebaut wird.

7. Verfahren nach einem der vorhergehenden Ansprüche,
**dadurch gekennzeichnet,**
**daß** im zumindest einen privaten Kommunikationsnetz (CN) die im Subadressing (SUB) übermittelte, angegebene Wählinformation (wi) bewertet und nach dem Feststellen einer internen Wählinformation (wi) die jeweilige Kommunikationsverbindung (KV) zu dem betreffenden Kommunikationsendgerät (KE(x)) des privaten Kommunikationsnetzes (CN) vermittelt wird.

8. Verfahren nach einem der vorhergehenden Ansprüche,
**dadurch gekennzeichnet,**
**daß** im zumindest einen privaten Kommunikationsnetz (CN) die im Subadressing (SUB) übermittelte, angegebene Wählinformation (wi) bewertet wird und nach dem Feststellen einer externen Wählinformation (wi) die jeweilige Kommunikationsverbindung (KV) über das jeweilige private Kommunikationsnetz (CN) an einen durch die angegebene Wählinformation (wi) bestimmten weiteren Kommunikationsanschluß (KA(w)) im Zielbereich (FB) des ISDN-Kommunikationsnetzes (ISDN) vermittelt wird.

9. Netzzugriffseinrichtung mit zumindest einem Kommunikationsanschluß (S0) an ein abgesetztes Kommunikationssystem (AKS) und zumindest einem Kommunikationsanschluß (SO) an ein ISDN-Kommunikationsnetz (ISDN)
- mit Mitteln zum Bewerten von beim Aufbau von vom abgesetzten Kommunikationssystem (AKS) initialisierten Kommunikationsverbindungen (KV) angegebenen, jeweils ein Zielendgerät identifizierenden Wählinformationen (wi), sowie
- mit weiteren Mitteln zum Aufbau von Kommunikationsverbindungen (KV) ins ISDN-Kommunikationsnetz (ISDN) mit jeweils der bewerteten, angegebenen Wählinformation (wi) und
- mit weiteren Mitteln zum Ableiten von zusätzlichen, vorgegebenen Wählinformationen (wiz) aus der bewerteten, angegebenen Wählinformation (wi) und mit Mitteln zum Aufbau von Kommunikationsverbindungen (KV) zu zumindest einem privaten Kommunikationsnetz (CN) mit der zusätzlichen Wählinformation (wiz), wobei die angegebene Wählinformation (wi) im Subadressing (SUB) gemäß der standardisierten Euro-ISDN-Signalisierung (DSS1) während des Verbindungsaufbaus zum zumindest einen privaten Kommunikationsnetz (CN) übermittelt wird.

10. Netzzugriffseinrichtung nach Anspruch 9,
**dadurch gekennzeichnet,**
**daß** Mittel zum Einfügen von gespeicherten, zusätzlichen Identifizierungsinformationen (ID) in das Subadressing (SUB) der standardisierten Euro-ISDN-Signalisierung (DSS1) vorgesehen sind.

11. Netzzugriffseinrichtung nach einem der Ansprüche 9 - 10,
**dadurch gekennzeichnet, daß**
- Mittel zum Speichern von dem zumindest einen privaten Kommunikationsnetz (CN) zugeordneten, interne Wählinformationen (wi) repräsentierenden Informationen,
- Mittel zum Vergleichen der bei einem Verbindungsaufbau angegebene Wählinformation (wi) mit den Informationen und
- Mittel zum Aufbau einer Kommunikationsverbindung (KV) zum zumindest einen privaten Kommunikationsnetz (CN) bei einem eine interne Wählinformationen (wi) anzeigenden Vergleichsergebnis
vorgesehen sind.

12. Netzzugriffseinrichtung nach einem der Ansprüche 9 - 11,
**dadurch gekennzeichnet, daß**
- Mittel zur Speicherung weiterer Wählinformationen (wi) von Kommunikationsendgeräten (KE(x,y), zu denen eine Kommunikationsverbindung (KV) im Sinne einer Gebührenersparnis über das zumindest eine private Kommunikationsnetz (CN) vermittelt wird,
- Mittel zum Vergleichen der jeweils bei einem Verbindungsaufbau angegebenen Wählinformationen (wi) mit den weiteren Wählinformationen (wi), und
- Mittel zum Aufbau einer Kommunikationsverbindung (KV) zum zumindest einen privaten Kommunikationsnetz (CN) bei einer Übereinstimmung der Wählinformationen (wi).

13. Netzzugriffseinrichtung nach einem der Ansprüche 9 - 12,
**dadurch gekennzeichnet,**
**daß** der zumindest eine Kommunikationsanschluß (S0) zum abgesetzten Kommunikationssystem (AKS) durch zumindest einen Euro-ISDN-Kommunikationsanschluß (S0) und/oder durch zumindest einen 1TR6-ISDN-Kommunikationsanschluß und/oder durch einen ISDN-Primäranschluß (S2M) und oder durch analoge Kommunikationsanschlüsse (HKZ) realisiert ist.

14. Netzzugriffseinrichtung nach einem der Ansprüche 9 - 13,
- mit zumindest einer Anschlußeinheit (S0,S2M), die mit
- einer Betriebstechnik-Anschlußeinheit (BT-AE) und
- einer Steuereinheit (CPU) verbunden sind, die
-- eine die vermittlungstechnische Schicht 3-Funktionen realisierende Programmstruktur (DSS1) sowie
-- eine die die betriebstechnische Verwaltung und Steuerung realisierende Programmstruktur (OP,AW,SI) und
-- eine die internen und externen Wählinformationen (wi) sowie Identifizierungsinformationen (ID) speichernde Tabelle (TAB) umfaßt.

15. Netzzugriffseinrichtung nach Anspruch 14,
dadurch g**ekennzeichnet,**
daß die Anschlußeinheit durch zumindest zwei, Schicht 1 und 2 eines ISDN-Basisanchlusses (S0) realisierende ISDN-Basis-Anschlußeinheiten (S0-AE) gebildet ist.

16. Netzzugriffseinrichtung nach Anspruch 14,
**dadurch gekennzeichnet,**
**daß** die Anschlußeinheit durch eine einen ISDN-Primäranschluß (S2M) realisierende ISDN-Primäranschlußeinheit (S2M-AE) gebildet ist.

17. Netzzugriffseinrichtung nach Anspruch 14,
**dadurch gekennzeichnet,**
**daß** die Anschlußeinheit durch eine einen analogen HKZ-Anschluß (HKZ) realisierende HKZ-Anschlußeinheit (HKZ-AE) gebildet ist.

## Claims

1. Method for controlling communication connections (KV) between at least one private communication network (CN) and outside communication systems (AKS) to which the communication terminals (KE1..n) are connected, via an ISDN communication network (ISDN),
- in which, during a connection setup from an outside communication system (AKS) specified dialing information (wi) identifying a destination terminal is evaluated and, depending on the evaluation result
-- either sets up a communication connection (KV) into the ISDN communication network (ISDN) with the specified dialing information (wi),
-- or additional pre-determined dialing information (wiz) is derived from the specified dialing information (wi), by means of which a connection to at least one private communication network (CN) is set up via the ISDN communication network (ISDN), with the specified dialing information (wi) in the subaddressing (SUB), according to the standardized Euro ISDN signaling (DSS1), is transmitted to at least one private communication network (CN) on connection setup.

2. Method according to Claim 1,
**characterized in that**,
- in at least one private communication network (CN), by using the dialing information (CLIP) of the calling communication terminal (KE1..n) connected to the outside communication system transmitted in each case, the communication network access authorization of the specific incoming communication connection (KV) is checked,
- if authorization is established, the incoming communication connection (KV) is set up and, for the purposes of forwarding the transmitted, specified dialing information (wi) is transmitted to at least one private communication network (CN), and
- if authorization is not established, the incoming communication connection (KV) is rejected.

3. Method according to one of the previous claims,
**characterized in that**,
in addition to the specified dialing information (wi), identification information (ID) is transmitted in the subaddressing (SUB) of the standardized Euro ISDN signaling (DSS1), and
- in the at least one private communication network (CN) the transmitted identification information (ID) is additionally used to check the authorization of the specific incoming communication connection (KV),
- if authorization is established, the incoming communication connection (KV) is set up and, for the purposes of forwarding the transmitted, specified dialing information (wi) is transmitted to the least one private communication network (CN), and
- if authorization is not established, the incoming communication connection (KV) is rejected.

4. Method according to one of the previous claims,
**characterized in that**,
in the case of the outside communication systems (AKS)
- the information indicating the internal dialing information (wi) allocated to at least one private communication network (CN) is saved,
- in the case of a connection setup, the specified dialing information (wi) is compared with the information (wi), and
- in the case of a comparison result indicating the internal dialing information (wi), a communication connection (KV) is set up via the ISDN communication network (ISDN) to at least one private communication network (CN).

5. Method according to one of the previous claims,
**characterized in that**,
in the case of the outside communication systems (AKS)
- further dialing information (wi) is stored by communication terminals to which a communication connection (KV) in the sense of a saving on call charges is switched via at least one private communication network (CN),
- for a connection setup, the specified dialing information (wi) is compared with further dialing information (wi) and if there is a match, the communication connection (KV) is set up via the ISDN communication network (ISDN) to the at least one private communication network (CN).

6. Method according to one of the previous claims,
**characterized in that**,
the communication connections (KV) are set up from outside communication systems (AKS) to communication connections (KA) determined by the pre-determined dialing information (wiz) of the at least one private communication network (CN).

7. Method according to one of the previous claims,
**characterized in that**,
in at least one private communication network (CN), the specified dialing information (wi) transmitted in the subaddressing (SUB) is evaluated and after an internal dialing information (wi) has been identified, the specific communication connection (KV) is switched to the relevant communication terminal (KE(x)) of the private communication network (CN).

8. Method according to one of the previous claims,
**characterized in that**,
in at least one private communication network (CN), the specified dialing information (wi) transmitted in the subaddressing (SUB) is evaluated and after an external dialing information (wi) has been identified, the specific communication connection (KV) is switched via the specific private communication network (CN) to a further communication connection (KA(w)) determined by the specified dialing information (wi) in the destination area (FB) of the ISDN communication network (ISDN).

9. Network access device with at least one communication connection (SO) to an outside communication system (AKS) and at least one communication connection (SO) to an ISDN communication network (ISDN)
- with means to evaluate dialing information (wi) specified on setup of communication connections (KV) initialized by the outside communication system (AKS)and identifying a destination terminal (wi) in each case,
- with further means for setting up communication connections (KV) into the ISDN communication network (ISDN) with the evaluated and specified dialing information (wi) in each case, and
- with further means for deriving additional, pre-determined dialing information (wiz) from the evaluated, specified dialing information (wi) and with means for setting up communication connections (KV) to at least one private communication network (CN) with the additional dialing information (wiz), with the specified dialing information (wi) being transmitted in the subaddressing (SUB) according to the standardized Euro ISDN signaling (DSS1) during the connection setup to at least one private communication network (CN).

10. Network access device according to Claim 9,
**characterized in that**,
means are provided for inserting saved, additional identification information (ID) in the subaddressing (SUB) of the standardized Euro ISDN signaling (DSS1).

11. Network access device according to one of the Claims 9 - 10,
**characterized in that**,
- means for saving information representing internal dialing information (wi) allocated to at least one private communication network (CN),
- means for comparing the dialing information (wi) specified in the case of a connection setup with the information and
- means for setting up a communication connection (KV) to at least one private communication network (CN) if a results comparison reveals internal dialing information (wi) are provided.

12. Network access device according to one of the Claims 9 - 11,
**characterized in that**,
- means for storing further dialing information (wi) of communication terminals (KE (x, y) to which a communication connection (KV) for the purpose of saving on call charges is switched via the at least one private communication network (CN),
- means for comparing the dialing information (wi) specified in a connection setup in each case with the further dialing information (wi), and
- means for setting up a communication connection (KV) to at least one private communication network (CN) if the dialing information (wi) matches are provided.

13. Network access device according to one of the Claims 9 - 12,
**characterized in that**,
the at least one communication connection (SO) to the outside communication system (AKS) is implemented by at least one Euro ISDN communication connection (SO) and/or by at least one 1TR6-ISDN communication connection and/or by an ISDN primary rate access (S2M) and or by analog communication connections (HKZ).

14. Network access device according to one of the Claims 9 - 13,
- with at least one access unit (S0,S2M) which is connected to
- an O&M system access unit (BT-AE) and
- a control unit CPU, which include
-- a program structure (DSS1) implementing the call processing layer 3 functions (DSS1) as well as
-- a program structure (OP,AW,SI) implementing the secure administration and control and
-- a table (TAB) storing the internal and external dialing information (wi) as well as the identification information (ID).

15. Network access device according to Claim 14,
**characterized in that**,
the access unit is formed by at least two ISDN basic access units (S0-AE) implementing layers 1 and 2 of an ISDN basic access (SO).

16. Network access device according to Claim 14,
**characterized in that**,
the access unit is formed by an ISDN primary access unit (S2M-AE) implementing an ISDN primary rate access (S2M).

17. Network access device according to claim 14,
**characterized in that**,
the connection unit is formed by an HKZ connection unit (HKZ-AE) implementing an analog HKZ connection (HKZ).

## Revendications

1. Procédé pour la commande de liaisons de communication (KV) entre au moins un réseau de communication (CN) privé et des systèmes de communication (AKS) éloignés et reliés à des terminaux de communication (KE1..n) au moyen d'un réseau de communication ISDN (ISDN),
- dans lequel, lors d'un établissement de liaison, une information de sélection (wi) indiquée et identifiant un terminal de destination est évaluée par un système de communication (AKS) éloigné et en fonction du résultat de l'évaluation
-- soit une liaison de communication (KV) avec le réseau de communication ISDN (ISDN) est établie avec l'information de sélection (wi) indiquée,
-- soit on déduit de l'information de sélection (wi) indiquée une information de sélection (wiz) supplémentaire et prédéfinie, à l'aide de laquelle une liaison avec l'au moins un réseau de communication (CN) privé est établi au moyen du réseau de communication ISDN (ISDN), l'information de sélection (wi) indiquée étant transmise dans le Subaddressing (SUB) selon la signalisation ISDN européenne (DSS1) standardisée lors de l'établissement de la liaison à l'au moins un réseau de communication (CN) privé.

2. Procédé selon la revendication 1,
**caractérisé en ce que**
- dans l'au moins un réseau de communication (CN) privé, l'autorisation d'accès au réseau de communication de la liaison de communication (KV) arrivant concerné est vérifiée à l'aide de l'information de sélection (CLIP) respectivement transmise du terminal de communication (KE1..n) appelant et raccordé au système de communication éloigné,
- **en ce que**, dans le cas d'une autorisation constatée, la liaison de communication (KV) arrivant est établie et l'information de sélection (wi) transmise et indiquée est transmise à l'au moins un réseau de communication (CN) privé dans le sens d'une retransmission, et
- **en ce que**, si l'autorisation n'est pas établie, la liaison de communication (KV) arrivant est refusée.

3. Procédé selon l'une quelconque des revendications précédentes,
**caractérisé en ce que**
en supplément de l'information de sélection (wi) indiquée, une information d'identification (ID) est transmise dans le Subaddressing (SUB) à la signalisation ISDN européenne (DSS1) standardisée, et
- **en ce que**, dans l'au moins un réseau de communication (CN) privé, on vérifie à l'aide de l'information d'identification (ID) transmise en supplément l'autorisation de la liaison de communication (KV) arrivant et concernée,
- avec une autorisation constatée, la liaison de communication (KV) arrivant est établie et l'information de sélection (wi) indiquée et transmise est transmise à l'au moins un réseau de communication (CN) privé dans le sens d'une retransmission, et
- **en ce que**, dans le cas d'une autorisation non établie, la liaison de communication (KV) arrivant est refusée.

4. Procédé selon l'une quelconque des revendications précédentes,
**caractérisé en ce que**
dans les systèmes de communication (AKS) éloignés,
- on mémorise des informations indiquant des informations de sélection (wi) internes et attribuées à l'au moins un réseau de communication (CN) privé,
- **en ce que**, lors d'un établissement de liaison, l'information de sélection (wi) indiquée est comparée avec les informations (wi), et
- **en ce que**, avec un résultat de comparaison indiquant une information de sélection (wi) interne, une liaison de communication (KV) est établie au moyen du réseau de communication ISDN (ISDN) avec l'au moins un réseau de communication (CN) privé.

5. Procédé selon l'une quelconque des revendications précédentes,
**caractérisé en ce que**
dans les systèmes de communication (AKS) éloignés,
- d'autres informations de sélection (wi) provenant de terminaux de communication sont stockées, auxquels une liaison de communication (KV) est transmise dans le sens d'une économie de taxes au moyen de l'au moins un réseau de communication (CN) privé,
- **en ce que**, lors d'un établissement de liaison, l'information de sélection (wi) indiquée est comparée avec les autres informations de sélection (wi), et, dans le cas d'une concordance, la liaison de communication (KV) est établie par l'intermédiaire du réseau de communication ISDN (ISDN) avec l'au moins un réseau de communication (CN) privé.

6. Procédé selon l'une quelconque des revendications précédentes,
**caractérisé en ce que**
les liaisons de communication (KV) sont établies de systèmes de communication (AKS) éloignés à des branchements de communication (KA'), définis par les informations de sélection (wiz) prédéfinies, de l'au moins un réseau de communication (CN) privé.

7. Procédé selon l'une quelconque des revendications précédentes,
**caractérisé en ce que**
dans l'au moins un réseau de communication (CN) privé, l'information de sélection (wi) indiquée et évaluée dans le Subaddressing (SUB) et après la constatation d'une information de sélection (wi) interne, la liaison de communication (KV) concernée est transmise au terminal de communication (KE(x)) concerné du réseau de communication (CN) privé.

8. Procédé selon l'une quelconque des revendications précédentes,
**caractérisé en ce que**
dans l'au moins un réseau de communication (CN) privé, l'information de sélection (wi) indiquée et transmise dans le Subaddressing (SUB) est évaluée et après la constatation d'une information de sélection (wi) externe, la liaison de communication (KV) respective est transmise au moyen du réseau de communication (CN) privé respectif à un autre branchement de communication (KA(w)) défini par l'information de sélection (wi) indiquée dans la zone de destination (FB) du réseau de communication ISDN (ISDN).

9. Appareil d'accès au réseau comprenant au moins un branchement de communication (S0) à un système de communication (AKS) éloigné et au moins un branchement de communication (S0) à un réseau de communication ISDN (ISDN)
- comprenant des moyens pour l'évaluation d'informations de sélection (wi) identifiant à chaque fois un terminal de destination et indiqués lors de l'établissement de liaisons de communication (KV) initialisées par le système de communication (AKS) éloigné, ainsi que
- d'autres moyens pour l'établissement de liaisons de communication (KV) dans le réseau de communication ISDN (ISDN) avec respectivement l'information de sélection (wi) indiquée et évaluée et
- d'autres moyens pour la déduction d'informations de sélection (wiz) prédéfinies et supplémentaires à partir de l'information de sélection (wi) indiquée et évaluée et avec des moyens pour l'établissement de liaisons de communication (KV) avec au moins un réseau de communication (CN) privé avec l'information de sélection (wiz) supplémentaire, l'information de sélection (wi) indiquée dans le Subaddressing (SUB) étant transmise selon la signalisation ISDN européenne (DSS1) standardisée pendant l'établissement de liaison avec au moins un réseau de communication (CN) privé.

10. Appareil d'accès au réseau selon la revendication 9,
**caractérisé en ce que**
des moyens sont prévus pour l'insertion d'informations d'identification (ID) supplémentaires et stockées dans le Subaddressing (SUB) de la signalisation ISDN européenne (DSS1 ) standardisée.

11. Appareil d'accès au réseau selon l'une quelconque des revendications 9-10,
**caractérisé en ce qu'**il est prévu
- des moyens pour la mémorisation d'informations représentant des informations de sélection (wi) internes et attribuées à l'au moins un réseau de communication (CN) privé,
- des moyens pour la comparaison de l'information de sélection (wi) indiquée lors d'un établissement de liaison avec les informations et
- des moyens pour l'établissement d'une liaison de communication (KV) avec l'au moins un réseau de communication (CN) privé dans le cas d'un résultat de comparaison indiquant une information de sélection (wi) interne.

12. Appareil d'accès au réseau selon l'une quelconque des revendications 9-11,
**caractérisé en ce que**
- il est prévu des moyens pour le stockage d'autres informations de sélection (wi) provenant de terminaux de communication (KE (x, y)), auxquels est transmise une liaison de communication (KV) dans le sens d'une économie de taxes au moyen de l'au moins un réseau de communication (CN) privé,
- des moyens pour la comparaison des informations de sélection (wi) indiquées respectivement lors d'un établissement de liaison avec les autres informations de sélection (wi), et
- des moyens pour l'établissement d'une liaison de communication (KV) avec l'au moins un réseau de communication (CN) privé dans le cas d'une concordance des informations de sélection (wi).

13. Appareil d'accès au réseau selon l'une quelconque des revendications 9-12,
**caractérisé en ce que**
l'au moins un branchement de communication (S0) avec le système de communication (AKS) éloigné est réalisé par au moins un branchement de communication ISDN européen (S0) et/ou par au moins un branchement de communication ISDN 1TR6 et/ou par un branchement primaire ISDN (S2M) et/ou par des branchements de communication analogiques (HKZ).

14. Appareil d'accès au réseau selon l'une quelconque des revendications 9-13, comprenant au moins une unité de branchement (S0, S2M), qui est reliée à
- une unité de branchement de technique d'exploitation (BT-AE) et
- une unité de commande (CPU), laquelle comprend
-- une structure de programme (DSS1 ) réalisant les fonctions de la couche 3 orientée commutation, et
-- une structure de programme (OP, AW, SI) réalisant la gestion et la commande de technique d'exploitation et
-- un tableau (TAB) mémorisant les informations de sélection (wi) internes et externes ainsi que des informations d'identification (ID).

15. Appareil d'accès au réseau selon la revendication 14,
**caractérisé en ce que**
l'unité de branchement est formée par au moins deux unités de branchement de base ISDN (S0-AE) réalisant la couche 1 et 2 d'un branchement de base ISDN (S0)

16. Appareil d'accès au réseau selon la revendication 14,
**caractérisé en ce que**
l'unité de branchement est formée par une unité de branchement primaire ISDN (S2M-AE) réalisant un branchement primaire ISDN (S2M).

17. Appareil d'accès au réseau selon la revendication 14,
**caractérisé en ce que**
l'unité de branchement est formée par une unité de branchement HKZ (HKZ-AE) réalisant un branchement analogique HKZ (HKZ).
